# EUROPEAN PATENT APPLICATION

(11) **EP 3 933 966 A1**
(43) Date of publication of application: **05.01.2022**
(21) Application number: 20762927.0
(22) Date of filing: 18.02.2020
(51) Int. Cl.: H01M 4/13, H01M 10/0567, H01M 10/0569, H01M 10/0587, H01M 2/02, H01M 2/26

(54) **NON-AQUEOUS ELECTROLYTE SECONDARY BATTERY**

(30) Priority: 28.02.2019 JP 2019035868
(71) Applicant: SANYO Electric Co., Ltd., Daito-shi Osaka 574-8534 (JP); Panasonic Corporation, Kadoma-shi Osaka 571-8501 (JP)
(72) Inventor: SAKAMOTO Kyohei, Chuo-ku, Osaka-shi, Osaka 540-6207 (JP); TAKIGAWA Masashi, Chuo-ku, Osaka-shi, Osaka 540-6207 (JP); NAMBUYA Shunsuke, Chuo-ku, Osaka-shi, Osaka 540-6207 (JP)
(74) Representative: Vigand, Philippe
(86) International application number: PCT/JP2020/006226
(87) International publication number: WO 2020/175232

(57) **Abstract**

The purpose of the present invention is to maintain good electric contact between a surface of a negative electrode core that composes an outer peripheral surface of an electrode body and an inner surface of an outer can, and to suppress increase in internal resistance and variation in resistance value. The non-aqueous electrolyte secondary battery which is an example of an embodiment of the present invention includes an electrode body around which a positive electrode and a negative electrode are spirally wound via a separator, a non-aqueous electrolyte, and a bottomed cylindrical outer can that accommodates the electrode body and the non-aqueous electrolyte. The negative electrode has a negative electrode core and a negative electrode mixture layer that is provided on the surface of the negative electrode core. The electrode body has, on the outer peripheral surface, an exposed portion where the surface of the negative electrode core is exposed, and the exposed portion is in contact with the inner surface of the outer can. The non-aqueous electrolyte comprises 0.1 to 1.0 mass% of a diisocyanate compound.

## Description

### TECHNICAL FIELD

The present disclosure relates to a non-aqueous electrolyte secondary battery, and more specifically relates to a non-aqueous electrolyte secondary battery comprising a wound-type electrode assembly.

### BACKGROUND ART

A non-aqueous electrolyte secondary battery has been conventionally widely known which comprises an electrode assembly obtained by spirally winding a positive electrode and a negative electrode with a separator being interposed therebetween, a non-aqueous electrolyte, and a cylindrical exterior can having an closed-end, the exterior can housing the electrode assembly and the non-aqueous electrolyte. Patent Literature 1 discloses a non-aqueous electrolyte secondary battery having a structure in which an exposed portion corresponding to a surface exposed of a negative electrode core is formed on an outer periphery of a wound-type electrode assembly and the exposed portion is in contact with an inner surface of a metal exterior can serving as a negative electrode external terminal, for the purposes of, for example, a reduction in resistance and an increase in output.

### CITATION LIST

### PATENT LITERATURE

PATENT LITERATURE 1: Japanese Unexamined Patent Application Publication No. 2013-254561

### SUMMARY

### TECHNICAL PROBLEM

However, the non-aqueous electrolyte secondary battery of Patent Literature 1 cannot allow any favorable electric contact between the surface of a negative electrode core and the inner surface of the exterior can to be maintained, and may result in an increase in internal resistance and an increase in variation in resistance value.

### SOLUTION TO PROBLEM

A non-aqueous electrolyte secondary battery as one aspect of the present disclosure comprises an electrode assembly obtained by spirally winding a positive electrode and a negative electrode with a separator being interposed therebetween, a non-aqueous electrolyte, and a cylindrical exterior can having an closed-end, the exterior can housing the electrode assembly and the non-aqueous electrolyte. The negative electrode includes a negative electrode core and a negative electrode mixture layer disposed on a surface of the negative electrode core, an exposed portion corresponding to a surface exposed of the negative electrode core is formed on an outer periphery of the electrode assembly and the exposed portion is in contact with an inner surface of the exterior can, and the non-aqueous electrolyte includes 0.1 to 1.0% by mass of a diisocyanate compound.

### ADVANTAGEOUS EFFECTS OF INVENTION

According to a non-aqueous electrolyte secondary battery as one aspect of the present disclosure, there can be maintained favorable electric contact between a surface of a negative electrode core, constituting an outer periphery of an electrode assembly, and an inner surface of an exterior can, and there can be suppressed an increase in internal resistance and the variation in resistance value.

### BRIEF DESCRIPTION OF DRAWING

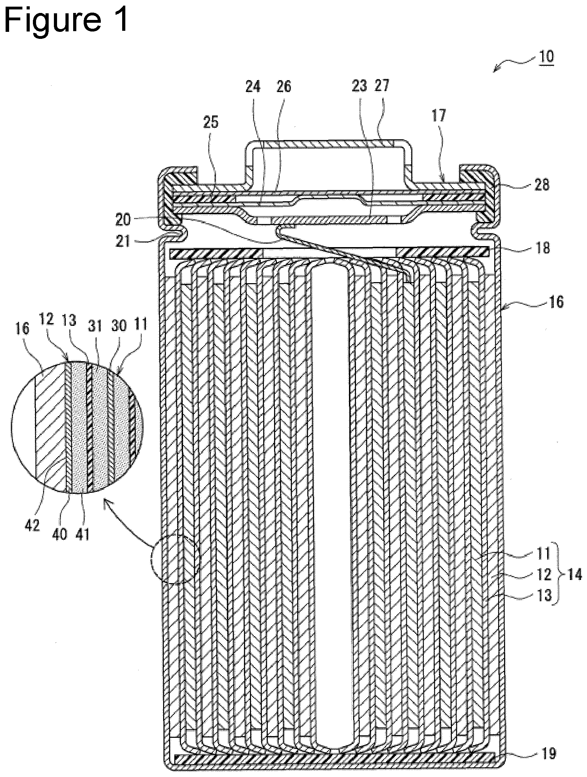

FIG. 1 is a sectional view of a non-aqueous electrolyte secondary battery of an exemplary embodiment.

### DESCRIPTION OF EMBODIMENTS

As described above, it is an important object to allow a non-aqueous electrolyte secondary battery having a structure in which a surface of a negative electrode core, constituting an outer periphery of a wound-type electrode assembly, and an inner surface of an exterior can are in contact with each other, to stably maintain favorable electric contact between the surface of the negative electrode core and the inner surface of the exterior can. The present inventors have made intensive studies, and as a result, have revealed that a metal material included in a battery is eluted due to charge and discharge and thus is precipitated as a metal compound low in conductivity, on a surface of a negative electrode core. Such a precipitate causes inhibition of any contact between the surface of the negative electrode core and an inner surface of an exterior can, resulting in an increase in internal resistance of the battery. In particular, it is considered that, when a compound containing fluorine is included, the compound reacts with a water content in an electrolyte to generate hydrofluoric acid, thereby causing the metal material to be corroded and eluted.

The present inventors have made intensive studies in order to achieve the object, and as a result, have found that a specified amount of a diisocyanate compound is added to a non-aqueous electrolyte to thereby suppress precipitation of a metal compound on a surface of a negative electrode core. This enables favorable electric contact between the surface of a negative electrode core and an inner surface of an exterior can to be maintained, and enables a non-aqueous electrolyte secondary battery low in resistance and small in variation in resistance value to be realized. When the amount of the diisocyanate compound added exceeds such a specified amount, an increase in resistance was confirmed. In other words, there is an optimal range with respect to the amount of the diisocyanate compound added, in order to achieve a reduction in resistance of the battery.

Hereinafter, an exemplary embodiment of the present disclosure will be described in detail. The drawing mentioned in the description of the embodiment is schematically illustrated, and thus the dimensional ratio of each component, and the like are to be determined in consideration of the following description.

FIG. 1 is a sectional view of a non-aqueous electrolyte secondary battery 10 of an exemplary embodiment. As illustrated in FIG. 1, the non-aqueous electrolyte secondary battery 10 comprises an electrode assembly 14, a non-aqueous electrolyte, and an exterior can 16 that houses the electrode assembly 14 and the non-aqueous electrolyte. The electrode assembly 14 includes a positive electrode 11, a negative electrode 12, and a separator 13, and has a wound structure in which the positive electrode 11 and the negative electrode 12 are spirally wound with the separator 13 being interposed therebetween. The exterior can 16 is a cylindrical metal container having a closed-end, which is opened on one side in the axial direction, and the opening of the exterior can 16 is sealed by a sealing assembly 17. Hereinafter, the sealing assembly 17 side and the bottom side of the exterior can 16, of the non-aqueous electrolyte secondary battery 10, are defined as the upper and the lower, respectively, for the purpose of illustration.

The positive electrode 11, the negative electrode 12, and the separator 13 constituting the electrode assembly 14 are each a belt-like long member, and are spirally wound and thus alternately stacked in the radial direction of the electrode assembly 14. The positive electrode 11 includes a positive electrode core 30 and a positive electrode mixture layer 31 disposed on a surface of the positive electrode core 30. Similarly, the negative electrode 12 includes a negative electrode core 40 and a negative electrode mixture layer 41 disposed on a surface of the negative electrode core 40. The non-aqueous electrolyte secondary battery 10 comprises insulating plates 18 and 19 respectively disposed on and under the electrode assembly 14.

The negative electrode 12 is disposed on an outer periphery of the electrode assembly 14, and an exposed portion 42 corresponding to a surface exposed of the negative electrode core 40 is formed on the outer periphery. The exposed portion 42 may be formed on a portion of the outer periphery of the electrode assembly 14, and is preferably formed on the entire outer periphery thereof. The exposed portion 42 may be formed on only one surface (outer surface) of the negative electrode core 40 facing the outside of the electrode assembly 14, or may be formed on both surfaces of the negative electrode core 40. The exposed portion 42 is formed, for example, in a range of about one to two perimeter lengths of the electrode assembly 14, from one end in the longitudinal direction of the negative electrode core 40 located on the outer periphery of the electrode assembly 14.

The exposed portion 42 of the negative electrode 12 is in contact with an inner surface of the exterior can 16 to allow the negative electrode 12 and the exterior can 16 to be electrically connected in the non-aqueous electrolyte secondary battery 10. In the present embodiment, the sealing assembly 17 serves as a positive electrode external terminal and the exterior can 16 serves as a negative electrode external terminal. A positive electrode lead 20 attached to the positive electrode 11 passes through a though-hole in the insulating plate 18 and extends toward the sealing assembly 17, and is connected to the lower surface of an internal terminal plate 23, which is the bottom board of the sealing assembly 17, by welding or the like. No negative electrode lead may be connected to the negative electrode 12, or a negative electrode lead to be connected to the inner surface of the bottom of the exterior can 16, by welding or the like, may be attached to other end in the longitudinal direction of the negative electrode 12, located on a winding core side of the electrode assembly 14. An exposed portion of any electrode core surface is formed on a portion to which an electrode lead is connected.

A gasket 28 is disposed between the exterior can 16 and the sealing assembly 17 to ensure that the interior of the battery is tightly sealed. The exterior can 16 includes, for example, a grooved portion 21 which has a portion of a lateral surface projected inward and which supports the sealing assembly 17. The grooved portion 21 is preferably formed annularly along the circumferential direction of the exterior can 16, and the upper surface thereof supports the sealing assembly 17. The sealing assembly 17 is fixed to the upper portion of the exterior can 16 by the grooved portion 21 and an opening end of the exterior can 16 swaged toward the sealing assembly 17.

The sealing assembly 17 has a structure in which an internal terminal plate 23, a lower vent member 24, an insulating member 25, an upper vent member 26, and a cap 27 are stacked in the listed order sequentially from the electrode assembly 14 side. Each of the members constituting the sealing assembly 17 has, for example, a disk or ring shape, and the members other than the insulating member 25 are electrically connected to each other. The lower vent member 24 and the upper vent member 26 are connected to each other at respective middle portions and the insulating member 25 is interposed between respective circumferences. If the internal pressure of the battery increases by abnormal heat generation, the lower vent member 24 changes its shape in such a way as to, for example, push up the upper vent member 26 toward the cap 27, and thus ruptures, thereby breaking the electrical connection between the lower vent member 24 and the upper vent member 26. If the internal pressure further increases, the upper vent member 26 ruptures to discharge gas through a vent hole of the cap 27.

Hereinafter, the positive electrode 11, the negative electrode 12, the separator 13, and the non-aqueous electrolyte, in particular, the non-aqueous electrolyte will be described in detail.

### [Positive Electrode]

The positive electrode 11 includes the positive electrode core 30 and the positive electrode mixture layer 31 disposed on a surface of the positive electrode core 30, as described above. The positive electrode core 30 here used can be, for example, foil of a metal, such as aluminum, which is stable in the electric potential range of the positive electrode 11, or a film in which the metal is disposed on an outer layer. The positive electrode mixture layer 31 includes a positive electrode active material, a conductive agent, and a binder, and is preferably disposed on each of both surfaces of the positive electrode core 30, except for a portion to which the positive electrode lead 20 is connected. The positive electrode 11 can be produced by, for example, forming the positive electrode mixture layer 31 on each of both surfaces of the positive electrode core 30 by coating each of surfaces of the positive electrode core 30 with a positive electrode mixture slurry including a positive electrode active material, a conductive agent, a binder, and the like, drying the resulting coatings, and then compressing the resultant.

The positive electrode active material is configured from a lithium-containing transition metal composite oxide as a main component. Examples of a metal element contained in the lithium-containing transition metal composite oxide include Ni, Co, Mn, Al, B, Mg, Ti, V, Cr, Fe, Cu, Zn, Ga, Sr, Zr, Nb, In, Sn, Ta, and W. One suitable example of the lithium-containing transition metal composite oxide is a composite oxide containing at least one of Ni, Co, and Mn. Specific examples include a lithium-containing transition metal composite oxide containing Ni, Co, and Mn, and a lithium-containing transition metal composite oxide containing Ni, Co, and Al.

Examples of the conductive agent included in the positive electrode mixture layer 31 can include carbon materials such as carbon black, acetylene black, Ketjenblack, and graphite. Examples of the binder included in the positive electrode mixture layer 31 can include fluoro resins such as polytetrafluoroethylene (PTFE) and poly(vinylidene fluoride) (PVdF), polyacrylonitrile (PAN), polyimide resins, acrylic resins, and polyolefin resins. Such a resin can be used in combination with, for example, a cellulose derivative such as carboxymethyl cellulose (CMC) or a salt thereof, and/or polyethylene oxide (PEO).

### [Negative Electrode]

The negative electrode 12 includes the negative electrode core 40 and the negative electrode mixture layer 41 disposed on a surface of the negative electrode core 40. The exposed portion 42 corresponding to a surface exposed of the negative electrode core 40 is formed on a portion corresponding to the outer periphery of the electrode assembly 14, in the negative electrode 12. The negative electrode core 40 here used can be, for example, foil of a metal, such as copper, which is stable in the electric potential range of the negative electrode 12, or a film in which the metal is disposed on an outer layer. The negative electrode mixture layer 41 includes a negative electrode active material and a binder, and is preferably disposed on, for example, each of both surfaces of the negative electrode core 40, except for a portion to which the negative electrode lead is connected, and the exposed portion 42. The negative electrode 12 can be produced by, for example, forming the negative electrode mixture layer 41 on each of both surfaces of the negative electrode core 40 by coating each of surfaces of the negative electrode core 40 with a negative electrode mixture slurry including a negative electrode active material, a binder, and the like, drying the resulting coatings, and then compressing the resultant.

The negative electrode mixture layer 41 includes, as a negative electrode active material, for example, a carbon active material that reversibly intercalates and deintercalates lithium ions. A suitable carbon active material is graphite, for example, natural graphite such as flake graphite, massive graphite, or earthy graphite, or artificial graphite such as massive artificial graphite (MAG) or graphitized mesophase carbon microbeads (MCMB). The negative electrode active material here used may be a Si active material constituted from at least one of Si and a Si-containing compound, and the carbon active material and the Si active material may be used in combination. The Si active material is larger in change of volume according to charge and discharge, than the carbon active material, and thus the Si active material is added to the negative electrode mixture layer 41 to thereby, for example, allow the exposed portion 42 to be strongly pushed onto the inner surface of the exterior can 16, resulting in a favorable contact state.

One example of a suitable Si active material is silicon oxide represented by SiOₓ (0.5 ≤ x ≤ 1.6). Such silicon oxide represented by SiOₓ has a structure in which fine particles of Si are dispersed in an amorphous SiO₂ matrix. The Si active material may also be a compound represented by Li_{2y}SiO_{(2+y)} (0 < y < 2), in which fine particles of Si are dispersed in a lithium silicate phase. A film high in conductivity, such as a carbon film, is preferably formed on surfaces of particles of the Si active material.

The binder included in the negative electrode mixture layer 41, here used, can be, for example, a fluoro resin, PAN, a polyimide resin, an acrylic resin, or a polyolefin resin as in the case of the positive electrode 11, and is preferably styrene-butadiene rubber (SBR). The negative electrode mixture layer 41 preferably further includes CMC or a salt thereof, polyacrylic acid (PAA) or a salt thereof, poly(vinyl alcohol) (PVA), or the like. In particular, SBR is suitably used in combination with CMC or a salt thereof, or PAA or a salt thereof.

### [Separator]

For example, an ion-permeable and insulating porous sheet is used as the separator 13. Specific examples of the porous sheet include a microporous thin film, woven fabric, and nonwoven fabric. Suitable examples of the material for the separator 13 include olefin resins such as polyethylene and polypropylene, and cellulose. The separator 13 may have any of a mono-layered structure and a stacked structure. For example, a heat-resistant layer may be formed on a surface of the separator 13.

### [Non-Aqueous Electrolyte]

The non-aqueous electrolyte includes a non-aqueous solvent and an electrolyte salt dissolved in the non-aqueous solvent. The non-aqueous electrolyte further includes 0.1 to 1.0% by mass of a diisocyanate compound. Examples of the non-aqueous solvent that can be used include esters, ethers, nitriles such as acetonitrile, amides such as dimethylformamide, and any mixed solvent of two or more thereof. The non-aqueous solvent may contain a halogen-substituted product formed by replacing at least a portion of hydrogen of any of the above solvents with a halogen atom such as fluorine. The non-aqueous electrolyte is not limited to a liquid electrolyte (non-aqueous electrolyte solution), and may be a solid electrolyte.

Examples of the esters include cyclic carbonate esters such as ethylene carbonate (EC), propylene carbonate (PC), and butylene carbonate, chain carbonate esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylate esters such as γ-butyrolactone and γ-valerolactone, and chain carboxylate esters such as methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, 1,2-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the halogen-substituted product include a fluorinated cyclic carbonate ester such as fluoroethylene carbonate (FEC), a fluorinated chain carbonate ester, and a fluorinated chain carboxylate ester such as methyl fluoropropionate (FMP). Examples of FEC include 4-fluoroethylene carbonate (monofluoroethylene carbonate), 4,5-difluoroethylene carbonate, 4,4-difluoroethylene carbonate, 4,4,5-trifluoroethylene carbonate, and 4,4,5,5-tetrafluoroethylene carbonate. Among these, 4-fluoroethylene carbonate is particularly preferable.

The non-aqueous electrolyte includes, for example, 0.5 to 10% by mass or 1 to 5% by mass of FEC based on the total mass of the non-aqueous electrolyte. In particular, when the Si active material is added to the negative electrode mixture layer 41, FEC is preferably used. Examples of one suitable non-aqueous solvent include a mixed solvent including EC, DMC, EMC, and FEC.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), borate salts such as LiB₁₀Cl₁₀, LiCl, LiBr, LiI, LiBCl, Li₂B₄O₇, and Li(B(C₂O₄)F₂), and imide salts such as LiN(SO₂CF₃)₂ and LiN(CₗF₂ₗ₊₁SO₂)(CₘF₂ₘ₊₁SO₂) {where 1 and m are integers of 1 or more}. Among these, LiPF₆ is preferably used in view of ionic conductivity, electrochemical stability, and the like. Such lithium salts may be used singly or a plurality thereof may be mixed and used. The concentration of the lithium salt is preferably 0.8 to 1.8 mol per liter of the non-aqueous solvent.

The non-aqueous electrolyte includes a diisocyanate compound, as described above. The diisocyanate compound is added to the non-aqueous electrolyte, to thereby not only suppress precipitation of a metal compound on a surface (exposed portion 42) of the negative electrode core 40, constituting the outer periphery of the electrode assembly 14, but also suppress an increase in resistance of the battery. When a compound including fluorine such as LiPF₆ is included in the battery, the compound is expected to react with a water content in the electrolyte to generate hydrofluoric acid, thereby causing a metal material of the exterior can 16 and the like to be easily eluted, resulting in an increase of a precipitate on the exposed portion 42, but the diisocyanate compound has the effect of reducing the amount of a metal eluted. The effect by addition of the diisocyanate compound is more remarkably exerted when the compound including fluorine is included.

The diisocyanate compound is added at a concentration of 0.1 to 1.0% by mass based on the total mass of the non-aqueous electrolyte. If the amount of the diisocyanate compound is less than 0.1% by mass, precipitation of a metal compound on the exposed portion 42 cannot be suppressed and no effect of suppression of an increase in resistance of the battery can be obtained. On the other hand, if more than 1.0% by mass of the diisocyanate compound is added, such precipitation of a metal compound is suppressed, but an increase in resistance of the battery is caused by any factor other than such precipitation. The content of the diisocyanate compound in the non-aqueous electrolyte is preferably 0.1 to 0.8% by mass, more preferably 0.1 to 0.6% by mass, particularly preferably 0.1 to 0.4% by mass.

The diisocyanate compound may be an aromatic diisocyanate having 6 to 20 carbon atoms, such as 1,3- or 1,4-phenylene diisocyanate, 2,4- or 2,6-tolylene diisocyanate (TDI), m- or p-xylylene diisocyanate (XDI), or 2,4'- or 4,4'-diphenylmethane diisocyanate (MDI), and is preferably an aliphatic diisocyanate.

The diisocyanate compound is, for example, a compound represented by general formula O=C=N-X-N=C=O, wherein X is an aliphatic hydrocarbon having 18 or less carbon atoms. Specific examples include linear chain aliphatic diisocyanates such as ethylene diisocyanate, tetramethylene diisocyanate, hexamethylene diisocyanate (HDI), and dodecamethylene diisocyanate, and branched chain aliphatic diisocyanates such as 2,2,4-trimethylhexamethylene diisocyanate and lysine diisocyanate.

The diisocyanate compound may be an alicyclic diisocyanate. Specific examples include isophorone diisocyanate (IPDI), dicyclohexylmethane-4,4'-diisocyanate (hydrogenated MDI), cyclohexylene diisocyanate, methylcyclohexylene diisocyanate (hydrogenated TDI), and cyclohexane-1,2- or 1,3-diylbis(methylene)diisocyanate (hydrogenated XDI).

Such diisocyanate compounds may be used singly or in combinations of a plurality thereof. A suitable diisocyanate compound is a compound represented by general formula O=C=N-X-N=C=O (wherein X is a hydrocarbon having 10 or less carbon atoms), and is particularly suitably at least one selected from hexamethylene diisocyanate (HDI), cyclohexane-1,2-diylbis(methylene)diisocyanate, and cyclohexane-1,3-diylbis(methylene)diisocyanate.

### EXAMPLES

Hereinafter, the present disclosure will be described in more detail with reference to Examples, but the present disclosure is not intended to be limited to these Examples.

### <Example 1>

### [Production of Positive Electrode]

A lithium-containing transition metal composite oxide containing Ni, Co, and Al was used as a positive electrode active material. Mixed were 100 parts by mass of the positive electrode active material, 1 part by mass of acetylene black, and 0.9 parts by mass of poly(vinylidene fluoride), and N-methyl-2-pyrolidone (NMP) was used as a dispersion medium, to thereby prepare a positive electrode mixture slurry. Next, both sides of a positive electrode core made of aluminum foil having a thickness of 15 µm were coated with the positive electrode mixture slurry, and the resultant coatings were dried and compressed, and then cut to a predetermined electrode size, to thereby produce a positive electrode (thickness 0.115 mm, width 56 mm, length 800 mm) in which a positive electrode mixture layer was formed on each of both sides of the positive electrode core. An exposed portion in which an electrode core surface was exposed was disposed on the middle portion in the longitudinal direction of the positive electrode, and a positive electrode lead was ultrasonically welded to the exposed portion.

### [Production of Negative Electrode]

A negative electrode active material here used was a mixed powder of 95 parts by mass of a graphite powder and 5 parts by mass of silicon oxide represented by SiOₓ (x = 1). Mixed were 100 parts by mass of the negative electrode active material, 1 part by mass of carboxymethyl cellulose (CMC), and 1 part by mass of styrene-butadiene rubber (SBR), and water was used as a dispersion medium, to thereby prepare a negative electrode mixture slurry. Next, both sides of a negative electrode core made of copper foil were coated with the negative electrode mixture slurry, and the resultant coatings were dried and compressed, and then cut to a predetermined electrode size, to thereby produce a negative electrode (thickness 0.117 mm, width 58 mm, length 900 mm) in which a negative electrode mixture layer was formed on each of both sides of the negative electrode core. An exposed portion in which an electrode core surface was exposed was disposed on each of both ends in the longitudinal direction of the negative electrode, and a negative electrode lead was ultrasonically welded to one of such exposed portions.

### [Preparation of Non-Aqueous Electrolyte Solution]

LiPF6 was dissolved at a concentration of 1.5 M in a non-aqueous solvent obtained by mixing ethylene carbonate (EC), ethyl methyl carbonate (EMC), and dimethyl carbonate (DMC) in a volume ratio of 25:5:70, and 4-fluoroethylene carbonate (FEC) was dissolved therein at a concentration of 2% by mass. Thereafter, hexamethylene diisocyanate was added thereto so that the concentration was 0.1% by mass based on the total mass of a non-aqueous electrolyte solution to be prepared, to thereby prepare a non-aqueous electrolyte solution.

### [Production of Battery]

A wound-type electrode assembly was produced by spirally winding the positive electrode and the negative electrode with a polyethylene separator being interposed therebetween. Such respective electrodes and the separator were here wound so that the positive electrode mixture layer was opposite to the negative electrode mixture layer with the separator being interposed therebetween and an exposed portion (exposed portion in which no negative electrode lead was present) of the negative electrode constituted an outer periphery of the electrode assembly. Respective insulating plates were disposed on and under the electrode assembly, thereafter the negative electrode lead was welded to the inner surface of the bottom of a cylindrical exterior can having a closed-end, and the positive electrode lead was welded to an internal terminal plate of the sealing assembly, to thereby house the electrode assembly in the exterior can. Thereafter, the non-aqueous electrolyte solution was injected into the exterior can in a reduced pressure manner, and the opening of the exterior can was sealed by the sealing assembly via a gasket, to thereby produce a cylindrical non-aqueous electrolyte secondary battery.

### <Example 2>

A cylindrical non-aqueous electrolyte secondary battery was produced in the same manner as in Example 1 except that the amount of the hexamethylene diisocyanate added in preparation of the non-aqueous electrolyte solution was changed to 0.2% by mass.

### <Example 3>

A cylindrical non-aqueous electrolyte secondary battery was produced in the same manner as in Example 1 except that the amount of the hexamethylene diisocyanate added in preparation of the non-aqueous electrolyte solution was changed to 0.5% by mass.

### <Example 4>

A cylindrical non-aqueous electrolyte secondary battery was produced in the same manner as in Example 1 except that the amount of the hexamethylene diisocyanate added in preparation of the non-aqueous electrolyte solution was changed to 1.0% by mass.

### <Comparative Example 1>

A cylindrical non-aqueous electrolyte secondary battery was produced in the same manner as in Example 1 except that the amount of the hexamethylene diisocyanate added in preparation of the non-aqueous electrolyte solution was changed to 2.0% by mass.

### <Comparative Example 2>

A cylindrical non-aqueous electrolyte secondary battery was produced in the same manner as in Example 1 except that no hexamethylene diisocyanate was added in preparation of the non-aqueous electrolyte solution.

### [Observation of Outermost Periphery of Negative Electrode Core]

Each of the batteries of Examples and Comparative Examples was initially charged and discharged at an environmental temperature of 25°C, thereafter such each battery was disassembled, and the state (presence of any precipitate) of a surface of the negative electrode core, constituting the outer periphery of the electrode assembly, was visually confirmed. The evaluation results are shown in Table 1.

### <Initial Charge and Discharge Conditions>

Such each battery was charged to a charge cutoff voltage of 4.2 V at a constant current of 0.5 It, and discharged to a discharge cutoff voltage of 3 V at a constant current of 0.5 It.

### [Evaluation of Internal Resistance]

Ten batteries with respect to each of the batteries of Examples and Comparative Examples were used, and were each subjected to measurement of the AC resistance (1 kHz) after the initial charge and discharge. The average value and the standard deviation (variation) of such resistance values are shown in Table 1.

### [Evaluation of Amount of Metal Eluted]

Each of the batteries of Examples 1 and 2 and Comparative Example 2 was subjected to measurement of the amount of any metal present in the non-aqueous electrolyte solution. The non-aqueous electrolyte solution was extracted by centrifugation, from such each battery after a lapse of 20 hours from injection of the non-aqueous electrolyte solution into the exterior can, and the amount of any metal eluted into the non-aqueous electrolyte solution was measured by ICP (high-frequency induction coupled plasma) emission spectrometric analysis. The evaluation results are shown in Table 2.

**[Table 1]**

| | Amount of diisocyanate added | Presence of precipitate | Internal resistance (mΩ) | |
|---|---|---|---|---|
| | | | Average value | Standard deviation |
| Example 1 | 0.1% by mass | No | 13.0 | 0.30 |
| Example 2 | 0.2% by mass | No | 13.0 | 0.30 |
| Example 3 | 0.5% by mass | No | 13.8 | 0.26 |
| Example 4 | 1.0% by mass | No | 14.4 | 0.28 |
| Comparative Example 1 | 2.0% by mass | No | 16.7 | 0.25 |
| Comparative Example 2 | - | Yes | 17.6 | 0.75 |

**[Table 2]**

| | Amount of diisocyanate added | Amount of metal eluted |
|---|---|---|
| Example 1 | 0.1% by mass | 1.7ppm |
| Example 2 | 0.2% by mass | 1.3ppm |
| Comparative Example 2 | - | 3.0ppm |

As clear from the results shown in Table 1, the batteries of Examples were each lower in resistance value and also smaller in variation in resistance value than the batteries of Comparative Examples. No precipitate was confirmed on the negative electrode core surface constituting the outer periphery of the electrode assembly in each of the batteries of Examples, such each battery including the diisocyanate compound, but any precipitate was confirmed on the negative electrode core surface in the battery of Comparative Example 2, the battery including no diisocyanate compound. Such any precipitate was presumed to be a metal compound low in conductivity. It was considered that the batteries of Examples were each suppressed in precipitation of any metal compound due to the effect by the diisocyanate compound and each maintained favorable electric contact between the negative electrode core surface and the inner surface of the exterior can, resulting in suppression of an increase in resistance. The battery of Comparative Example 1, in which the amount of the diisocyanate compound added was 2.0% by mass, allowed no precipitate to be confirmed on the negative electrode core surface, but was increased in resistance. In other words, a too large amount of the diisocyanate compound added caused an increase in resistance by any factor other than precipitation.

As shown in Table 2, the diisocyanate compound could be added to the non-aqueous electrolyte solution, to thereby suppress the amount of any metal eluted into the non-aqueous electrolyte solution. It was presumed that such any metal eluted into the non-aqueous electrolyte solution was precipitated as a metal compound on the negative electrode core surface, and it was thus considered that the amount of any metal eluted could be reduced to thereby suppress precipitation of any metal compound, resulting in a reduction in resistance of such each battery.

### REFERENCE SIGNS LIST

10 non-aqueous electrolyte secondary battery, 11 positive electrode, 12 negative electrode, 13 separator, 14 electrode assembly, 16 exterior can, 17 sealing assembly, 18, 19 insulating plate, 20 positive electrode lead, 21 grooved portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer, 42 exposed portion

## Claims

1. A non-aqueous electrolyte secondary battery comprising:
an electrode assembly obtained by spirally winding a positive electrode and a negative electrode with a separator being interposed therebetween;
a non-aqueous electrolyte; and
a cylindrical exterior can having an closed-end, the exterior can housing the electrode assembly and the non-aqueous electrolyte; wherein
the negative electrode includes a negative electrode core and a negative electrode mixture layer disposed on a surface of the negative electrode core,
an exposed portion corresponding to a surface exposed of the negative electrode core is formed on an outer periphery of the electrode assembly and the exposed portion is in contact with an inner surface of the exterior can, and
the non-aqueous electrolyte includes 0.1 to 1.0% by mass of a diisocyanate compound.

2. The non-aqueous electrolyte secondary battery according to claim 1, wherein the diisocyanate compound is a compound represented by general formula O=C=N-X-N=C=O, wherein X is an aliphatic hydrocarbon having 18 or less carbon atoms.

3. The non-aqueous electrolyte secondary battery according to claim 2, wherein the diisocyanate compound is at least one selected from hexamethylene diisocyanate, cyclohexane-1,2-diylbis(methylene)diisocyanate, and cyclohexane-1,3-diylbis(methylene)diisocyanate.

4. The non-aqueous electrolyte secondary battery according to any one of claims 1 to 3, wherein the non-aqueous electrolyte includes fluoroethylene carbonate.
